# EUROPEAN PATENT SPECIFICATION

(11) **EP 3 936 661 B1**
(45) Date of publication and mention of the grant of the patent: **17.05.2023**
(21) Application number: 21183800.8
(22) Date of filing: 05.07.2021
(51) Int. Cl.: D21H 17/53, C08J 5/04, D04H 1/40, D04H 5/04, B27N 3/00

(54) **BINDER, AND APPARATUS AND METHOD FOR FORMING FIBER-BASED ITEM**
BINDEMITTEL, VORRICHTUNG UND VERFAHREN ZUR HERSTELLUNG EINES GEGENSTANDES AUF FASERBASIS
LIANT, ET APPAREIL ET PROCÉDÉ DE FORMATION D'UN ARTICLE À BASE DE FIBRES

(30) Priority: 07.07.2020 JP 2020117078
(43) Date of publication of application: 12.01.2022
(73) Proprietor: Seiko Epson Corporation, Tokyo 160-8801 (JP)
(72) Inventor: SAGO, Takumi, Suwa-shi, 392-8502 (JP); NAKAZAWA, Masahiko, Suwa-shi, 392-8502 (JP); UENO, Yoshihiro, Suwa-shi, 392-8502 (JP)
(74) Representative: Miller Sturt Kenyon

(56) References cited:
- US-A1- 2019 100 881

## Description

The present application is based on, and claims priority from JP Application Serial Number 2020-117078, filed July 7, 2020.

### BACKGROUND

### 1. Technical Field

The present disclosure relates to a binder, and an apparatus and a method for forming fiber-based items.

### 2. Related Art

A dry process not or hardly using water is desired for forming fiber-based items such as paper. For example, JP-A-2015-092032 discloses a dry process for manufacturing sheets, including mixing fibers and a thermoplastic resin and heating the accumulated mixture. A further example of the manufacturing of sheets is described in US 2019/100881.

Heating the mixture of the fibers and the thermoplastic resin to a temperature higher than the melting point of the thermoplastic resin causes the resin to spread among the fibers, and subsequent cooling solidifies the resin to bind the fibers. Fiber-based items are thus manufactured.

Unfortunately, the mixture of the fibers and the resin can contain minute particles such as fiber fragments or fiber dust. In a process for manufacturing fiber-based items from a mixture containing such minute particles, fiber dust or the like can fall from the fiber-based item, which may cause dust in the apparatus, for example.

### SUMMARY

According to an aspect of the present disclosure, a binder is provided for forming fiber-based items and for binding fibers. The binder contains a polyester and an aggregation inhibitor. The polyester contains a structural unit derived from polyethylene terephthalate, a structural unit derived from at least one polyvalent carboxylic acid, and a structural unit derived from at least one polyhydric alcohol including trimethylolpropane. The binder exhibits a viscosity coefficient higher than 3500 P (poises) at 150°C in dynamic viscoelasticity measurement.

Another aspect of the present disclosure is directed to an apparatus for forming fiber-based items. The apparatus includes the binder.

According to still another aspect of the present disclosure, a method is provided for forming fiber-based items. The method includes mixing fibers and a binder to prepare a mixture, and heating the mixture. The binder contains a polyester and an aggregation inhibitor. The polyester contains a structural unit derived from polyethylene terephthalate, a structural unit derived from at least one polyvalent carboxylic acid, and a structural unit derived from at least one polyhydric alcohol including trimethylolpropane. The binder exhibits a viscosity coefficient higher than 3500 P at 150°C in dynamic viscoelasticity measurement.

### BRIEF DESCRIPTION OF THE DRAWINGS

FIG. 1 is a schematic diagram of a fiber-based item forming apparatus according to an embodiment of the present disclosure.
FIG. 2 is a plot showing the temperature dependences of the viscosity coefficients in dynamic viscoelasticity measurement of the binders in an Example and Comparative Examples.

### DESCRIPTION OF EXEMPLARY EMBODIMENTS

Some embodiments of the present disclosure will now be described. The following description illustrates some exemplary embodiments of the subject matter of the present disclosure.

### 1. Binder

The binder according to an embodiment of the present disclosure binds fibers to each other and is suitably used for forming fiber-based items.

### 1. 1. Fibers

The fibers to be bound by the binder can be selected from, but not limited to, a wide range of fiber materials. The fiber materials may be natural fibers such as animal fibers or plant fibers or chemical fibers such as organic fibers, inorganic fibers, and organic-inorganic composite fibers. More specifically, examples of fiber materials include cellulose, silk, wool, cotton, hemp, kenaf, flax, ramie, jute, manila hemp, sisal hemp, conifers, and broadleaf trees. Such materials may be used individually or in combination. Also, the fibers may be purified recycled fibers.

The fibers may be produced from, for example, used paper or cloth, and the raw material of the fibers contains at least one of the fiber materials cited above. The fibers may be surface-treated. The fiber materials may be pure or may contain impurities, additives, or any other constituents.

Individual ones of the fibers have an average diameter of 1 µm to 1000 µm, for example, 2 µm to 500 µm or 3 µm to 200 µm. For fibers having noncircular sections, the diameter is the largest of the lengths perpendicular to the longitudinal direction or the circle equivalent diameter that is the diameter of a circle having an area equivalent to the cross section of the fiber.

The length of individual ones of the fibers, in the longitudinal direction, may be, but is not limited to, 1 µm to 5 mm, for example, 2 µm to 3 mm or 3 µm to 2 mm.

The fibers bound by the binder disclosed herein may include fiber fragments, that is, very short fibers. The length of fiber fragments is 1 µm to 1 mm, for example, 2 µm to 100 µm. From the viewpoint of reducing minute particles falling out of the fiber-based items, it is generally beneficial that the fiber material of the fiber-based item contains no or few fiber fragments. However, the binder disclosed herein reduces the likelihood of fiber fragments fall out of the fiber-based item and, accordingly, reduces minute particles even when the fiber material contains fiber fragments.

### 1. 2. Fiber-Based Item

The fiber-based item made using the binder disclosed herein contains fibers bound to each other with the binder and is not otherwise limited. The fiber-based item may be in the form of a sheet, a board, a web, or an uneven plate, an aggregate, a block, or a combination of such forms. Typical fiber-based items include paper and nonwoven fabrics. Paper is made of, for example, pulp or wastepaper and may be in a sheet form, such as recording paper used for writing and printing, wallpaper, wrapping paper, colored paper, drawing paper, or Kent paper. Nonwoven fabrics are thicker and weaker than paper and include fiberboards, tissues, kitchen paper, cleaning cloth or paper, filters, liquid absorbers, sound absorbers, cushioning, and mats, in addition to generally known nonwoven fabrics.

### 1. 3. Binder Constituents

The binder disclosed herein contains a polyester and an aggregation inhibitor.

### 1. 3. 1. Polyester

The polyester contains a structural unit derived from polyethylene terephthalate (PET), a structural unit derived from one or more polyvalent carboxylic acids, and a structural unit derived from one or more polyhydric alcohols. In other words, the polyester is a reaction product of a mixture of PET, one or more polyvalent carboxylic acids, and one or more polyhydric alcohols.

### 1. 3. 1. 1. PET-Derived Structural Unit

The structural unit derived from PET (hereinafter referred to as PET-derived structural unit) is introduced to the polyester by a reaction of the PET in the raw material mixture.

The PET can be produced by known esterification or transesterification of ethylene glycol with terephthalic acid, dimethyl terephthalate, or the like and polycondensation.

The PET may be virgin, used, or recycled PET. Also, the PET may be produced from plant-derived materials.

The recycled PET may be pellets formed from used PET or crushed pieces of PET products, such as PET films and bottles, and their scraps.

In the PET produced from plant-derived materials, either ethylene glycol or terephthalic acid or both are derived from a plant. Whether the PET is produced using plant-derived materials can be determined by "Standard Test Methods for Determining the Biobased Content of Solid, Liquid, and Gaseous Samples Using Radiocarbon (C14) Analysis" specified in ASTM D6866.

In some embodiments, recycled PET or PET using plant-derived materials is used in view of environmental protection. The PET using plant-derived materials may be virgin or used.

The PETs as described above may be used individually or in combination.

From the viewpoint of appropriately controlling the crystallinity of the polyester, the PET may have an intrinsic viscosity (IV) of 0.2 to 1.2, for example, 0.3 to 1.1 or 0.4 to 0.6.

The IV of a PET is an index of the molecular weight of the PET. The IV of the PET can be controlled by, for example, polycondensation time.

The IV of a PET is the measurement at 30°C of the solution of 0.3 g of the PET in 30 mL of 1:1 mixed solution of phenol and 1,1,2,2-tetrachloroethane with an Ubbelohde viscometer.

From the viewpoint of appropriately controlling the crystallinity of the polyester, the PET content in the raw material mixture may be 30% to 55%, for example, 40% to 55% or 50% to 55%, relative to the total mass of the mixture.

Also, the proportion of the PET-derived acid component may be 40% to 75%, for example, 50% to 75% or 60% to 75%, relative to the total moles of the acid components.

The acid components mentioned here refer to all the acid components contained in the raw material mixture. The acid components include PET-derived acid components, such as terephthalic acid and dimethyl terephthalate, polyvalent carboxylic acid components, and monovalent carboxylic acid components described later herein.

### 1. 3. 1. 2. Polyvalent Carboxylic Acid-Derived Structural Unit

**The** structural unit derived from one or more polyvalent carboxylic acids is introduced to the polyester by a reaction of the polyvalent carboxylic acids in the raw material mixture.

The polyvalent carboxylic acids include divalent carboxylic acids and trivalent or higher valent carboxylic acids. Such divalent and trivalent or higher valent carboxylic acids may be used in combined, and either divalent or trivalent or higher valent carboxylic acids may be used in combination.

Examples of the divalent carboxylic acid components include aromatic dicarboxylic acids, such as terephthalic acid, isophthalic acid, naphthalenedicarboxylic acids (e.g., 1,4-, 1,5, 1,6-, 1,7-, 2,6-, and 2,7-naphthalenedicarboxylic acids), and lower alkyl esters or anhydrides of such dicarboxylic acids; and aliphatic dicarboxylic acids, such as succinic acid, isodecylsuccinic acid, dodecenylsuccinic acid, maleic acid, fumaric acid, adipic acid, sebacic acid, furandicarboxylic acid, and lower alkyl esters and anhydrides of such dicarboxylic acids.

Lower esters of terephthalic acid and isophthalic acid include dimethyl terephthalate, dimethyl isophthalate, diethyl terephthalate, diethyl isophthalate, dibutyl terephthalate, and dibutyl isophthalate.

In some embodiments, terephthalic acid, isophthalic acid, and adipic acid are selected as the divalent carboxylic acid in view of cost and easy handling.

Examples of trivalent and higher valent carboxylic acids include trimellitic acid, pyromellitic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,2,7,8-octanetetracarboxylic acid, and anhydrides and lower alkyl esters of such carboxylic acids.

Trimellitic acid, trimellitic anhydride, pyromellitic acid, and pyromellitic anhydride are useful in terms of easy handling and cost. In some embodiments, trimellitic acid and trimellitic anhydride may be used as the trivalent or higher valent carboxylic acid.

The polyvalent carboxylic acid component content in the raw material mixture may be 15% to 30%, for example, 15% to 25% or 15% to 20%, relative to the total mass of the mixture.

Also, the proportion of the polyvalent carboxylic acid components may be 25% to 60%, for example, 25% to 50% or 25% to 40%, relative to the total moles of the acid components.

### 1. 3. 1. 3. Polyhydric alcohol-Derived Structural Unit

**The** structural unit derived from one or more polyhydric alcohols is introduced to the polyester by a reaction of the polyhydric alcohols in the raw material mixture.

The polyhydric alcohols include at least trimethylolpropane, and the polyester contains a trimethylolpropane-derived structural unit as the polyhydric alcohol-derived structural unit. The proportion of the trimethylolpropane-derived structural unit in the polyester may be 1 to 4 parts or 1.5 to 4 parts relative to the total moles (100 parts) of the structural units derived from acid components.

Hence, in the raw material mixture, the proportion of trimethylolpropane is 1 part or more and may be 1 to 5 parts, for example, 1 to 4 parts or 1.5 to 3 parts, relative to the total moles (100 parts) of acid components.

The trimethylolpropane content in the raw material mixture may be 0.1% to 5%, for example, 0.2% to 3% or 0.4% to 2%, relative to the total mass of the mixture.

When the trimethylolpropane content is equal to or higher than the lower limit of such ranges, the polyester is less likely to be colored. In addition, the binder can more firmly bind fibers. When the trimethylolpropane content is lower than or equal to the upper limit of the above ranges, the binder containing the polyester can be stably stored even in high-temperature environments. In addition, the resulting polyester is less likely to gel.

When the proportion of the trimethylolpropane-derived structural unit is equal to or higher than the lower limit of the above ranges, the polyester is still less likely to be colored. Also, the binder containing such a polyester can more firmly bind fibers. When the proportion of the trimethylolpropane-derived structural unit is lower than or equal to the upper limit of the above ranges, the binder can be more stably stored even in high-temperature environments.

The polyhydric alcohols may further include a bisphenol A propylene oxide adduct. In other words, the polyester may contain a structural unit derived from the bisphenol A propylene oxide adduct.

In the polyester containing a structural unit derived from a bisphenol A polypropylene oxide adduct, the proportion of such a structural unit may be 18 to 28 parts or 20 to 27 parts relative to the total moles (100 parts) of the structural units derived from acid components.

Bisphenol A propylene oxide adducts include polyoxypropylene (2.0)-2,2-bis(4-hydroxyphenyl)propane, polyoxypropylene (2.2)-2,2-bis(4-hydroxyphenyl)propane, polyoxypropylene (2.3)-2,2-bis(4-hydroxyphenyl)propane, polyoxypropylene (2.4)-2,2-bis(4-hydroxyphenyl)propane, polyoxypropylene (3.3)-2,2-bis(4-hydroxyphenyl)propane, and polyoxypropylene (6)-2,2-bis(4-hydroxyphenyl)propane. The figures in the parentheses following the chemical name polyoxypropylene represent the average moles of propylene oxide (PO) added to the corresponding compound.

Bisphenol A propylene oxide adducts, when used, may be used individually or in combination.

The polyhydric alcohol components may further include divalent alcohols other than bisphenol A propylene oxide adducts (hereinafter referred to as further dihydric alcohols) and trihydric or higher alcohols other than trimethylolpropane (hereinafter referred to as further trivalent or higher valent alcohols).

Examples of further dihydric alcohols include aromatic alcohols, such as polyoxyethylene (2.0)-2,2-bis(4-hydroxyphenyl)propane, polyoxyethylene-(2.2)-2,2-bis(4-hydroxyphenyl)propane, polyoxyethylene-(2.3)-2,2-bis(4-hydroxyphenyl)propane, and polyoxypropylene (2.2)-polyoxyethylene (2.0)-2,2-bis(4-hydroxyphenyl)propane; and aliphatic alcohols, such as ethylene glycol, neopentyl glycol, propylene glycol, hexanediol, polyethylene glycol, 1,3-propanediol, 1,4-butanediol, diethylene glycol, triethylene glycol, 1,4-cyclohexanedimethanol, D-isosorbide, L-isosorbide, isomannide, erythritan, and 1,4-dihydroxy-2-butene. The figures in the parentheses following the chemical name polyoxyethylene represent the average moles of ethylene oxide (EO) added to the corresponding compound, and those following the chemical name polyoxypropylene represent the average moles of propylene oxide (PO) added to the corresponding compound.

Further dihydric alcohols may be used individually or in combination.

Examples of further trihydric or higher alcohols include sorbitol, 1,4-sorbitan, pentaerythritol, dipentaerythritol, tripentaerythritol, 1,2,4-butanetriol, 1,2,5-pentanetriol, glycerol, 2-methyl-1,2,3-propanetriol, 2-methyl-1,2,4-butanetriol, and 1,3,5-trihydroxymethylbenzene.

Further trihydric or higher alcohols may be used individually or in combination.

In the raw material mixture containing one or more bisphenol A polypropylene oxide adducts, the proportion of such dihydric alcohol components may be 18 to 28 parts or 20 to 27 parts relative to the total moles (100 parts) of acid components.

Also, the bisphenol A propylene oxide adduct content in the raw material mixture may be 25% to 45%, for example, 25% to 40% or 25% to 35%, relative to the total mass of the mixture.

### 1. 3. 1. 4. Other Structural Units

The polyester may contain further structural units other than those described above. Hence, the raw material mixture may contain further constituents other than PET, polyvalent carboxylic acids, and polyhydric alcohols. The structural units derived from such further constituents are introduced to the polyester by a reaction of the further constituent in the raw material mixture.

Such further constituents include monovalent carboxylic acids and monohydric alcohols. Examples of monovalent carboxylic acids include aromatic carboxylic acids with carbon numbers of 30 or less, such as benzoic acid and p-methylbenzoic acid; aliphatic carboxylic acids with carbon numbers of 30 or less, such as stearic acid and behenic acid; and unsaturated carboxylic acids containing at least one double bond in the molecule, such as cinnamic acid, oleic acid, linoleic acid, and linolenic acid.

Examples of monohydric alcohols include aromatic alcohols with carbon numbers of 30 or less, such as benzyl alcohol; and aliphatic alcohols with caron number of 30 or less, such as oleyl alcohol, lauryl alcohol, cetyl alcohol, stearyl alcohol, and behenyl alcohol.

In some embodiments, the polyester has a glass transition temperature Tg of 65°C or more, for example, 65°C to 85°C or 70°C to 80°C, in view of the stability of the binder in storage. When the polyester has a glass transition temperature equal to or higher than the lower limit of such ranges, the binder containing the polyester can be stably stored even in high-temperature environments. When the polyester has a glass transition temperature lower than or equal to the upper limit of the above ranges, the binder can more firmly bind fibers.

The glass transition temperature of the polyester can be determined as described below. A measurement curve is formed through differential scanning calorimetry (DSC) at a heating rate of 20°C/min. The temperature at the intersection of the baseline of the measurement curve at low temperatures and the tangent of the endothermic curve lying in the vicinity of the glass transition temperature is defined as the glass transition temperature.

The softening point of the polyester may be 100°C to 150°C or 100°C to 140°C. When the polyester has a softening point equal to or higher than the lower limit of such ranges, the binder containing the polyester and the resulting fiber-based item can be more stably stored even in high-temperature environments. When the polyester has a softening point lower than or equal to the upper limit of the above ranges, the binder containing the polyester can more firmly bind fibers.

The softening point of the polyester can be determined by a measurement with a flow tester at a load of 20 kgf and a heating rate of 5°C/min. The temperature at which half of 1.0 g of polyester has flowed out through a nozzle with a diameter of 1 mm and a length of 10 mm is defined as the softening point.

The acid value (AV) of the polyester may be 10 mg KOH/g to 40 mg KOH/g or 10 mg KOH/g to 30 mg KOH/g. Polyesters having acid values equal to or higher than the lower limit of such ranges are highly productive. Also, polyesters having an acid value lower than or equal to the upper limit of the above ranges are resistant to moisture and more likely to produce environment-resistant binders.

The acid value is the number of milligrams of potassium hydroxide required to neutralize the carboxy groups in 1 g of a sample, represented by mg KOH/g. The acid value of polyester is determined by titrating a solution of the polyester in benzyl alcohol with 0.02 N KOH solution, using cresol red as the indicator.

Although the molecular weight of the polyester is not particularly limited, the weight average molecular weight (Mw), in some embodiment, is 5000 or more or 8000 or more and 30000 or less or 20000 or less from the viewpoint of increasing the glass transition temperature and reducing the softening point. Also, the number average molecular weight (Mn) may be 1000 or more or 2000 or more and 10000 or less or 8000 or less from the same viewpoint.

The molecular weight distribution of the polyester is not particularly limited. In some embodiments, however, the ratio (Mw/Mn) of the weight average molecular weight (Mw) measured by gel permeation chromatography (GPC) to the number average molecular weight (Mn) measured by GPC is 2 or more, 2.5 or more, or 3 or more and 30 or less or 10 or less from the viewpoint of increasing the glass transition temperature and reducing the softening point.

### 1. 3. 1. 5. Polyester Production Process

A process for producing the polyester will now be described. The polyester production process includes bringing into a reaction the above-described raw material mixture containing PET, one or more polyvalent carboxylic acid components, one or more polyhydric alcohol components, and optional constituents.

In exemplary embodiments, the reaction of the raw material mixture includes either esterification or transesterification, or both. The reaction of the raw material mixture may be followed by a polycondensation reaction.

More specifically, the raw material mixture and a catalyst or the like in a reaction vessel are heated and subjected to at least either esterification or transesterification, followed by removing the water or alcohol produced by the reaction. Then, a polycondensation reaction is performed to yield a polyester. In this instance, the reaction vessel may be gradually evacuated to 150 mmHg (20 kPa) or less, for example, 15 mmHg (2 kPa) or less, to evaporate polyhydric alcohol components.

Examples of the catalyst used for the esterification or transesterification and the polycondensation include, but are not limited to, titanium compounds, such as titanium alkoxides, titanium carboxylates, titanyl carboxylates, titanyl carboxylate salts, and titanium chelates; organic tin compounds, such as dibutyltin oxide and tin 2-ethylhexante; and inorganic tin compounds, such as tin oxide. Other catalysts, such as calcium acetate (including hydrates), zinc acetate, antimony trioxide, and germanium dioxide, may be used.

Titanium alkoxides include tetramethoxy titanium, tetraethoxy titanium, tetrapropoxy titanium, tetrabutoxy titanium, tetrapentoxy titanium, and tetraoctoxy titanium.

Titanium carboxylates include titanium formate, titanium acetate, titanium propionate, titanium octanoate, titanium oxalate, titanium succinate, titanium maleate, titanium adipate, titanium sebacate, titanium hexanetricarboxylate, titanium isooctanetricarboxylate, titanium octanetetracarboxylate, titanium decanetetracarboxylate, titanium benzoate, titanium phthalate, titanium terephthalate, titanium isophthalate, titanium 1,3-naphthalenedicarboxylate, titanium 4,4-biphenyldicarboxylate, titanium 2,5-toluenedicarboxylate, titanium anthracenedicarboxylate, titanium trimellitate, titanium 2,4,6-naphthalenetricarboxylate, titanium pyromellitate, and titanium 2,3,4,6-naphthalenetetracarboxylate.

In some embodiments, titanium compounds, particularly tetraethoxy titanium, are used as the catalyst because such compounds facilitate the production of polyesters that can exhibit reduced emission of total volatile organic compounds (TVOCs).

The catalyst may be an individual compound or a combination of two or more compounds.

The polymerization temperature for the esterification or transesterification and the polycondensation may be 180°C to 280°C or 200°C to 270°C. The polymerization at a temperature equal to or higher than the lower limit of such temperature ranges increases the productivity of the polyester. Also, the polymerization at a temperature lower than or equal to the upper limit of the above temperature ranges can reduce decomposition of the polyester or by-production of volatile odorous components, reducing TVOC emission.

The polymerization end point may be determined by the softening point of the polyester. For example, a polycondensation reaction is continued until the torque of the stirring blade indicates the value representing a predetermined softening point, and the polymerization is terminated. For terminating the polymerization, stirring the reaction vessel is stopped, and nitrogen is introduced into the reaction vessel to return the pressure in the vessel to normal. After cooling, the resulting polyester may be crushed or pulverized into a desired size, as appropriate.

### 1. 3. 2. Aggregation Inhibitor

The binder disclosed herein contains an aggregation inhibitor. The aggregation inhibitor hinders powdery binder particles from aggregating. In some embodiments, the aggregation inhibitor is a substance that can be distributed on the surfaces of the polyester particles or coat the surfaces. The aggregation inhibitor is effective for polyester particles and all binder particles.

Inorganic fine particles may be used as the aggregation inhibitor. Such an aggregation inhibitor on the surfaces of the binder particles can be highly effective in reducing aggregation. The term "aggregation" refers to a state where pieces or particles of a substance or different substances are in physical contact with each other by static electricity or Van der Waals force. When a mass of a plurality of pieces, for example, a powder, is in an unaggregated state, not all the pieces are separate from each other. In other words, some of the pieces in an unaggregated state may form aggregates. When such aggregates account for 10 mass% or less, for example, about 5 mass% or less, of all the pieces, the pieces are considered to be unaggregated. Also, a powder in a bag is in a state where the powder particles are in contact with each other but can be easily separated by softly stirring, dispersing with airflow, free-falling, or applying any other external force that does not break the particles. The powder in such a state is considered to be unaggregated.

Examples of the aggregation inhibitor include silica, fumed silica, titanium oxide, aluminum oxide, zinc oxide, cerium oxide, magnesium oxide, zirconium oxide, strontium titanate, barium titanate, and calcium carbonate.

The average particle size (number average particle size) of the aggregation inhibitor may be, but is not limited to, 0.001 µm to 1 µm, for example, 0.008 µm to 0.6 µm. Although the aggregation inhibitor has a small particle size at the level of what is called nanoparticles and consists typically of primary particles, some of the primary particles may bind together to form higher-order particles. The aggregation inhibitor with a primary particle size in the above ranges can favorably coat the surfaces of the binder particles, reducing aggregation effectively.

When the aggregation inhibitor content in the binder is 0.1 to 5 parts relative to the total mass (100 parts) of the binder, the aggregation inhibitor can function as intended. In some embodiments, from the viewpoint of enhancing the effect of the aggregation inhibitor and keeping the aggregation inhibitor from falling out of the resulting fiber-based item, the aggregation inhibitor content may be 0.2 to 4 parts or 0.5 to 3 parts relative to the total mass (100 parts) of the binder.

For distributing the aggregation inhibitor on the binder surfaces to coat the binder, the aggregation inhibitor may be mixed with the polyester by melt kneading or the like, but this does not limit the coating process. Unfortunately, melt kneading can cause many of the aggregation inhibitor particles to enter the polyester particles, reducing the effect of the aggregation inhibitor for the amount of the aggregation inhibitor added. It is effective to distribute as much aggregation inhibitor as possible onto the surfaces of the binder particles in view of the mechanism for reducing aggregation. The aggregation inhibitor distributed on the surfaces of the binder particles is in a state of coating or covering the binder particles.

For distributing the aggregation inhibitor on the surfaces of the binder particles, the aggregation inhibitor may be mixed with the binder to contact the binder surfaces with static electricity or Van der Waals force. However, in some embodiments, the binder powder and the aggregation inhibitor may be uniformly mixed in a high-speed rotation mixer. For this operation, a known apparatus, such as an FM mixer, a Henschel mixer, or a super mixer, may be used.

The aggregation inhibitor can be thus distributed onto the surfaces of the binder particles. At least some particles of the aggregation inhibitor distributed on the surfaces of the binder particles are engaged into the binder particles. The aggregation inhibitor in such a state is unlikely to fall from the binder particles, consistently functioning as intended.

### 1. 3. 3. Other Constituents

The binder may optionally contain a synthetic resin, a coloring agent, an ultraviolet light absorbent, flame retardant, an antistatic agent, a charge control agent, an organic solvent, a surfactant, a preservative/fungicide, an antioxidant, an oxygen absorbent, and other additives. Such optional constituents may be contained in the binder particles or externally added to the binder particles.

Examples of the synthetic resin include polyethylene, polypropylene, polyamide, poly acetal, polyethylene terephthalate, polybutylene terephthalate, polyethylene succinate, polybutylene succinate, polyhydroxybutyrate, polylactic acid, polyphenylene sulfide, polyether ether ketone, polyvinyl chloride, polystyrene, methyl poly(meth)acrylate, acrylonitrile-butadiene-styrene resin, polycarbonate, modified polyphenylene ether, polyethersulfone, polyetherimide, and polyamide-imide. The synthetic resin may be a copolymer or have a modified form, and examples of such a resin include styrene resins, acrylic resins, styrene-acrylic copolymers, olefin resins, vinyl chloride resins, polyester resins, polyamide resins, polyurethane resins, polyvinyl alcohol-based resin, vinyl ether resins, N-vinyl resins, and styrene-butadiene copolymers.

The binder can be used as the material of the fiber-based item to bind fibers. In this instance, the binder maintains and enhances the mechanical strength of the fiber-based item against tension, tear, and the like, or paper strength. Whether the fiber-based item contains such a binder can be determined by, for example, infrared spectrophotometry (IR), nuclear magnetic resonance (NMR), mass spectrometry (MS), or any chromatography.

### 1. 4. Physical Properties of Binder

### 1. 4. 1. Viscosity Coefficient

The binder exhibits a viscosity coefficient higher than 3500 P (poises) at 150°C in dynamic viscoelasticity measurement. The viscosity coefficient of the binder in dynamic viscoelasticity measurement at 150°C may be 4000 P or more, for example, 4500 P or more or 5000 P or more. When the binder has a viscosity coefficient higher than 3500 P or more at 150°C in dynamic viscoelasticity measurement, the binder at the surface of the material mixture of fiber-based item is unlikely to penetrate the mixture in the process of forming the fiber-based item. Thus, the polyester in the binder at the surface of the material mixture, or the final fiber-based item, is likely to bind to fiber dust such as fiber fragments, reducing dust falling.

Also, the upper limit of the viscosity coefficient of the binder at 150°C in dynamic viscoelasticity measurement may be 50000 P or less, for example, 30000 P or 10000 P. When the viscosity coefficient of the binder at 150°C in dynamic viscoelasticity measurement has such an upper limit, the binder can flow to spread without requiring excessive pressure in the process of forming the fiber-based item.

The dynamic viscoelasticity measurement of the binder can be performed according to an usual method with a dynamic rheometer, for example, Rheosol G3000 manufactured by UBM. The binder to be measured may be in the form of, but not limited to, a pellet, a strap, or a tablet. For the measurement, a jig fit for the sample shape is used. In the measurement, the sample is heated at a rate of 5°C/min from room temperature. A stress of 1 Hz in frequency is applied to the sample at temperatures of, for example, 100°C to 180°C, and the response to the stress is detected. Thus, the temperature dependences of the viscosity coefficient, the elasticity, and the like are obtained. The viscosity coefficient of the binder at 150°C in dynamic viscoelasticity measurement is determined by reading the viscosity coefficient at 150°C from these data.

### 1. 4. 2. Glass Transition Temperature

In the description of the present disclosure, the glass transition temperature of the binder is the same as that of the polyester. For the binder containing a plurality of polyesters having different glass transition temperatures, the glass transition temperature of the binder is that of the polyester with the lowest glass transition temperature.

In some embodiments, the glass transition temperature of the binder is 65°C or more, for example, 65°C to 85°C or 70°C to 80°C, in view of the stability of the binder in storage. The binder having a glass transition temperature equal to or higher than the lower limit of such ranges can be stably stored even in high-temperature environments. The binder having a glass transition temperature lower than or equal to the upper limit of the above ranges can more firmly bind fibers.

The glass transition temperature of the binder is determined in the same manner as that of the polyester.

### 1. 4. 3. Softening Point

The softening point of the binder may be 100°C to 150°C or 100°C to 140°C. The binder with a softening point in such ranges increases the mechanical strength of the final fiber-based item.

The softening point of the binder is determined in the same manner as that of the polyester.

### 1. 4. 4. Average Particle size

In some embodiments, the binder is pulverized into powder with a mixer or the like. The volume average particle size of the powdery binder may be designed to increase the mechanical strength of the final fiber-based item, and the binder is pulverized and classified according to such a designed particle size. The appropriate volume average particle size d of the binder varies depending on the binder content in the fiber-based item. In an embodiment in which the binder content is 5% to 70% by mass, the volume average particle size d may be 1 µm to 100 µm or 3 µm to 50 µm.

Also, the volume average particle size of the binder may have a deviation in a distribution. For example, in an assumed normal distribution of n-number individual binder particles (n is 100 or more), the standard deviation σ may be 0.1 µm to 25 µm, 0.1 µm to 12 µm, or 0.6 µm to 6 µm. The particle size distribution may be what is called bimodal or multimodal. The strength of the binder-based item can be increased based on such a particle size distribution. In a multimodal distribution, the particles can have average sizes in the vicinities of each peak of the distribution. These average particle sizes can be designed as with the volume average particle size d.

In exemplary embodiments, the binder particles are as spherical as possible. However, the shape of the binder particles is not limited to this and may be disciform, fibrous, or indefinite. Although the general volume average particle size of the binder is designed as desired, the volume average particle size and particle size distribution in practice can be adjusted by classification or sizing.

The volume average particle size of the binder can be measured with, for example, a particle size distribution analyzer based on a laser diffraction/scattering method. For example, a particle size distribution analyzer using dynamic light scattering (for example, Microtrac UPA manufactured by Nikkiso) may be used. For the cumulative number frequency of the particle size, the binder particles suspended in water can be measured with a particle size and shape analyzer for suspensions (FPIA-2000 manufactured by Sysmex).

### 1. 5. Binder Production Process

The binder disclosed herein can be produced, for example, in a process including a kneading step of melting and kneading the polyester, a pelletizing step of pelletizing the kneaded polyester, a pulverizing step of pulverizing the pellets, and a mixing step of mixing an aggregation inhibitor into the pulverized polyester with a high-speed mixer or the like. The aggregation inhibitor may be added in the kneading step. Optional additives, such as a synthetic resin, a coloring agent, an ultraviolet light absorbent, a flame retardant, an antistatic agent, a charge control agent, an organic solvent, a surfactant, a preservative/fungicide, an antioxidant, and an oxygen absorbent, can be added in any of the process steps.

The melt kneading may be performed with, for example, a kneader, a Banbury mixer, a single-screw extruder, a multi-screw extruder, a two-roll mill, a three-roll mill, a continuous kneader, a continuous two roll mill, or the like. The pulverization may be performed with a crusher or pulverizing machine, such as a hammer mill, a pin mill, a cutter mill, a pulverizer, a turbo mill, a disk mill, a screen mill, or a jet mill. Two or more of such machines may be combined for forming binder pellets or powder.

The pulverizing step may be performed in stages by roughly crushing the polyester to particle sizes of about 1 mm and further pulverizing into desired smaller sizes. In this instance, any of the above-cited machines may be used as needed in the individual stages. Freeze pulverization may be applied to increase the pulverization efficiency. The binder thus produced is powder and may contain particles of varying sizes. Accordingly, the binder may be classified with a known classifier.

### 2. Fiber-Based Item Forming Method

The method for forming the fiber-based item disclosed herein includes mixing fibers with the binder to prepare a mixture, and heating the mixture. The resulting fiber-based item contains the binder and the fibers, and in which the fibers are bound to each other with the binder.

Both steps, mixing and heating, may be performed in a variety of manners. In the mixing step, for example, fibers and the binder may be mixed in air. In the heating step, for example, the mixture may be heated with a heat press, a heat roller, or the like to melt or soften the binder. The mixing step is performed at a temperature at which the binder can be heated to the softening point or higher.

In addition to preparing the mixture and heating the mixture, the fiber-based item forming method may include preparing fibers, treating the fibers, shaping the mixture, pressing the mixture, shaping the fiber-based item, and any other steps.

In an embodiment of forming a sheet as the fiber-based item, the method may optionally include at least one of the following steps: cutting the raw material such as pulp sheets or used paper in air, defibrating the raw material into fibers in air, classifying the defibrated fibers to remove impurities and fiber fragments, screening unnecessarily long fibers and undefibrated pieces in air, pressing at least either accumulated fibers or the fiber-based item, cutting the fiber-based item, and packing the fiber-based item.

The mixing ratio of the fibers and the binder for the fiber-based item can be appropriately designed according to, for example, the desired strength and the use. In the fiber-based item in a sheet form used as copy paper or the like, the mass ratio of the binder to the fibers is, for example, from 5% to 70%.

The fiber-based item forming method uses the binder. When the material mixture is heated, the binder at the surface of the mixture is unlikely penetrate the mixture. Thus, the polyester in the binder at the surface of the material mixture, or the final fiber-based item, is likely to bind to fiber fragments, dust particles, or the like, consequently providing a fiber-based item from which fiber dust is unlikely to fall.

### 3. Fiber-Based Item Forming Apparatus

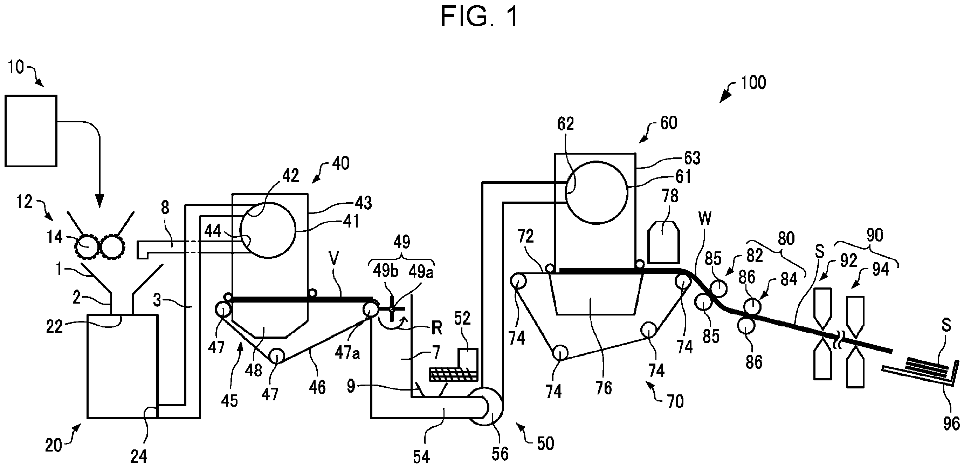

An apparatus that can form sheets as the fiber-based item will now be described. An embodiment of the fiber-base item forming apparatus will be described with reference to the drawings. FIG. 1 is a schematic diagram of a fiber-based item forming apparatus 100 according to an embodiment of the present disclosure. In the fiber-based item forming apparatus 100, a mixture of defibrated fibers and the binder containing a polyester and an aggregation inhibitor is heated to enable the binder to bind the fibers, thus forming a sheet S as the fiber-based item.

The fiber-based item forming apparatus 100 includes a feeding section 10, a rough crushing section 12, a defibrating section 20, a screening section 40, a first web forming section 45, a rotation member 49, a mixing section 50, an accumulating section 60, a second web forming section 70, a sheet forming section 80, and a cutting section 90, as depicted in FIG. 1.

The feeding section 10 feeds the raw material to the rough crushing section 12. The feeding section 10 may be, for example, an automatic feeder to continuously introduce the raw materials into the rough crushing section 12. The raw material fed by the feeding section 10 contains fibers described above of, for example, used paper or pulp sheets.

The rough crushing section 12 cuts or roughly crushes the raw material fed by the feeding section 10 into small pieces under, for example, atmospheric conditions. The small pieces may be few centimeter squares. In the illustrated embodiment, the rough crushing section 12 includes a crushing blade 14 capable of cutting the fed raw material. The rough crushing section 12 may be a shredder. The raw material pieces cut in the rough crushing section 12 are received in a hopper 1 and transferred to the defibrating section 20 through a tube 2.

The defibrating section 20 defibrates the raw material pieces cut in the crushing section 12. The term "defibrate" used herein implies that a material defined by fibers binding to each other is broken into separate, discrete fibers. The defibrating section 20 can also separate the resin particles, ink, toner, bleeding inhibitor, and other substances attached to the raw material from the fibers.

A mass of defibrated fibers that have passed through the defibrating section 20 is called a defibration product. The defibration product may contain resin particles removed from the fibers by defibration, a coloring agent such as ink or toner, and paper additives such as a bleeding inhibitor and a paper enforcing agent, in addition to the defibrated fibers. The defibrated fibers are in the form of strings. The defibrated fibers may be strings independent of one another without being entangled or may be in the form of aggregates of entangled strings.

The defibrating section 20 defibrates the material in a dry process. The dry process mentioned herein implies that the defibration or other operation is performed not in liquid but in a gaseous atmosphere, such as in the atmospheric air. The defibrating section 20 may be an impeller mill. The defibrating section 20 generates airflow to suck the material and discharge the defibration product. The defibrating section 20 sucks the raw material transported by the airflow at the inlet 22, defibrates the raw material, and transports the defibration product to the outlet 24. The defibration product that has passed through the defibrating section 20 is transferred to the screening section 40 through the tube 3. The airflow generated from the defibrating section 20 may transport the defibration product from the defibrating section 20 to the screening section 40. Alternatively, another airflow generator, such as a blower, may be used to transport the defibration product.

The screening section 40 classifies the defibrated fibers introduced through the inlet 42 from the defibrating section 20 by length. The screening section 40 includes a drum 41 and a housing 43 accommodating the drum 41. The drum 41 may be a sieve. The drum 41 include a mesh member to classify the defibration product into two groups: first classified pieces including fibers and particles smaller than the mesh size, which can pass through the mesh openings of the mesh member, and a second classified pieces including larger fibers, undefibrated pieces, and their aggregates. The second classified pieces are larger than the mesh size and cannot pass through the mesh openings. For example, the first classified pieces are transferred to the accumulating section 60 through a tube 7. The second classified pieces are returned to the defibrating section 20 through a tube 8 from the outlet 44. More specifically, the drum 41 is a hollow cylindrical sieve rotated by a motor. The mesh member of the drum 41 is, for example, a wire net, an expanded metal produced by expanding a metal plate with slits, or a punching metal plate that is a metal plate having openings formed with a press machine or the like.

The first web forming section 45 transports the first classified pieces, having passed through the screening section 40, to the tube 7. The first web forming section 45 includes a mesh belt 46, tension rollers 47, and a suction mechanism 48.

The suction mechanism 48 sucks the first classified pieces dispersed in the air through the opening of the screening section 40 and draws the pieces onto the mesh belt 46. The first classified pieces are accumulated on the moving mesh belt 46 to form a web V. The mesh belt 46, the tension rollers 47, and the suction mechanism 48 have substantially the same structures as the mesh belt 72, the tension rollers 74, and the suction mechanism 76 of the second web forming section 70 described later herein.

The web V is formed in a fluffy body containing a large amount of air by passing through the screening section 40 and the first web forming section 45. The web V accumulated on the mesh belt 46 is thrown into the tube 7 and transported to the accumulating section 60.

The rotation member 49 can cut the web V. In the illustrated embodiment, the rotation member 49 includes a base 49a and projections 49b protruding from the base 49a. The projections 49b are in the form of, for example, plates. In the illustrated embodiment, four projections 49b are provided at regular intervals. Rotating the base 49a in direction R rotates the projections 49b around the base 49a as an axis. Cutting the web v with the rotation member 49 reduces, for example, the fluctuation in the amount per hour of the defibration product fed to the accumulating section 60.

The rotation member 49 is disposed near the first web forming section 45. In the illustrated embodiment, the rotation member 49 is near the tension roller 47 located downstream of the path of the web V. The rotation member 49 is positioned so as to enable the projections 49b to come into contact with the web V but to avoid contacting the mesh belt 46 on which the web V is accumulated. This arrangement reduces the likelihood that the projections 49b wear the mesh belt 46. The smallest distance between the projections 49b and the mesh belt 46 is, for example, 0.05 mm to 0.5 mm. Such a distance enables the mesh belt 46 to cut the web V without undergoing damage.

The mixing section 50 mixes the first classified pieces delivered from the screening section 40 and the above-described binder, and optionally additives. The mixing section 50 includes an additive supply unit 52 operable to supply additives, a tube 54 through which the first classified pieces and the additives are transported, and a blower 56. In the illustrated embodiment, the additives are fed into the tube 54 from the additive supply unit 52 through a hopper 9. The tube 54 and the tube 7 directly communicate with each other.

In the mixing section 50, the blower 56 generates airflow. The airflow transports the first classified pieces and the additives while mixing these materials in the tube 54. The mechanism operable to mix the first classified pieces and the additives is not particularly limited and may be configured to stir the materials with a blade rotating at a high speed or configured to rotate a container like a V mixture.

The additive supply unit 52 may be a screw feeder as depicted in FIG. 1 or a disk feeder (not shown). The additives fed from the additive supply unit 52 include the binder. When the binder is added, the fibers are not bound. The binder melts and binds fibers when passing through the sheet forming section 80.

The additives to be fed from the additive supply unit 52 may include other substances, such as a coloring agent capable of coloring the fibers, an aggregation inhibitor capable of hindering the fibers or the binder particles from aggregating, and a flame retardant capable of making the fibers or the like less flammable, depending on the type of sheet to be formed. The mixture prepared in the mixing section 50 is transferred to the accumulating section 60 through the tube 54.

The mixture from the mixing section 50 is introduced into the accumulating section 60 through the inlet 62. The accumulating section 60 disentangles entangled fibers of the defibration product and disperses the disentangled fibers in the air, allowing the fibers to fall. Thus, the accumulating section 60 uniformly accumulates the mixture on the second web forming section 70.

The accumulating section 60 includes a drum 61 and a housing 63 accommodating the drum 61. The drum 61 is a hollow cylindrical rotatable sieve. The drum 61 has a mesh member that allows the fibers and binder particles smaller than the mesh size of the mesh member to pass and fall, thus selecting such small fibers and binder particles from the mixture delivered from the mixing section 50. The drum 61 may have the same structure as the drum 41.

The sieve of the drum 61 does not necessarily function to screen a specific substance. More specifically, the sieve used as the drum 61 refers to a member with a mesh, and the drum 61 may allow the entirety of the mixture introduced into the drum 61 to fall.

The mixture falling from the accumulating section 60 is accumulated on the second web forming section 70 to form a second web W. The second web forming section 70 includes, for example, a mesh belt 72, tension rollers 74, and a suction mechanism 76.

The mixture falling through the opening of the accumulating section 60 is accumulated on the moving mesh belt 72. The mesh belt 72 is tensioned by the tension rollers 74 and is breathable but adapted to keep the fibers and particles from easily passing through. The mesh belt 72 moves by the rotation of the tension rollers 74. The mixture falling from the accumulating section 60 is gradually accumulated on the continuously moving mesh belt 72, thus forming a web W on the mesh belt 72.

The suction mechanism 76 is disposed under the mesh belt 72. The suction mechanism 76 is operable to generate airflow downward. The suction mechanism 76 sucks the mixture dispersed in the air from the accumulating section 60 and draws the mixture onto the mesh belt 72. Thus, the mixture can be discharged at high speed from the accumulating section 60. Also, the suction mechanism 76 produces a downflow in the path of the falling mixture to prevent the defibrated pieces and additives from being entangled during falling.

The mixture is thus formed into a fluffy web W containing a large amount of air through the accumulating section 60 and the second web forming section 70. The web W accumulated on the mesh belt 72 is transported to the sheet forming section 80.

In the illustrated embodiment, a moisture control unit 78 is provided to control the moisture content of the web W. The moisture control unit 78 is operable to add water or water vapor to the web W to control the moisture content of the web W.

The sheet forming section 80 forms the web W accumulated on the mesh belt 72 into a sheet S by pressing and heating. The sheet forming section 80 heats the mixture of defibration product and additives in the web W to bind the fibers in the mixture to each other with the binder.

The sheet forming section 80 includes a pressing member 82 operable to press the web W, and a heating member 84 operable to heat the web W pressed by the pressing member 82. The pressing member 82 includes a pair of calendar rollers 85 and presses the web W. The web W is pressed to reduce the thickness, thus increasing the density. The heating member 84 may be a heating roller, a heat press, a hot plate, a warm air blower, an infrared heater, or a flash fuser. In the illustrated embodiment, the heating member 84 includes a pair of heating rollers 86. The heating rollers 86 implemented as the heating member 84 can form sheets S while continuously transporting the web W compared to using a plate press as the heating member 84. The calendar rollers 85 and the heating rollers 86 may be arranged such that their rotational axes are parallel to each other. The calendar rollers 85 can apply a higher pressure than the heating roller 86 to the web W. The numbers of the calendar rollers 85 and the heating rollers 86 are not particularly limited.

The cutting section 90 cuts the sheet S formed in the sheet forming section 80. In the illustrated embodiment, the cutting section 90 includes a first cutting member 92 operable to cut the sheet S in the direction intersecting the sheet transport direction, and a second cutting member 94 operable to cut the sheet S in the direction parallel to the sheet transport direction. The second cutting member 94 may be, for example, cut the sheet S coming from the first cutting member 92.

Thus, the sheet S is cut into pieces having predetermined dimensions. The cut pieces of the sheet S (hereinafter referred to as cut sheets S) are ejected to the ejection section 96.

The fiber-based item forming apparatus disclosed herein uses the above-described binder, consequently reducing the occurrence of fiber dust or any other minute particles. Thus, the apparatus can reduce the accumulation of dust or particles therein.

### 4. Examples and Comparative Examples

The inventive concept of the present disclosure will be further described with reference to Examples and Comparative Examples but is not limited to the following Examples.

### 4. 1. Preparation of Binder Samples

### 4. 1. 1. EXAMPLE 1

A binder sample of Example 1 was prepared as described below.

### (1) Polyester Synthesis

Into a reaction vessel equipped with a distillation column were added 72 parts of polyethylene terephthalate (PET), 27.9 parts of terephthalic acid, 0.1 parts of adipic acid, 24 parts of polyoxypropylene (2.3)-2,2-bis(4-hydroxyphenyl)propane, 2 parts of trimethylolpropane, and 500 ppm of a catalyst tetrabutoxyethane, relative to the total moles (100 parts) of acid components. For the PET, a unit made up of 1 mol of terephthalic acid and 1 mol of ethylene glycol is defined as 1 mol of PET. The terephthalic acid derived from 1 mol of PET constitutes 1 mol of an acid component, and the ethylene glycol derived from the PET constitutes 1 mol of an alcohol component. Then, the materials were stirred at a fixed rotational speed of 200 rpm with the stirring blade in the reaction vessel and heated to 265°C. The materials were thus subjected to esterification with this temperature kept. The esterification was continued until water evaporation from the reaction system was completed.

Then, the reaction system was cooled to 255°C and evacuated to 133 Pa at this temperature over about 20 minutes, thus evaporating the polyhydric alcohols from the reaction system for polycondensation. The viscosity of the reaction system increased with the reaction proceeding, and the vacuum degree was increased while the viscosity was increasing. The condensation reaction was continued until the torque of the stirring blade reached a value representing a predetermined softening point. When the torque had reached the predetermined value, the stirring was stopped. After the reaction system was returned to normal pressure and pressurized with nitrogen, the reaction product, polyester, was removed from the reaction vessel. The resulting polyester was solidified by cooling to room temperature and then roughly crushed with a Rotoplex.

### (2) Sizing of Polyester

The roughly crushed polyester was further crushed to diameters of 1 mm or less with a hammer mill (Lab Mill LM-5 manufactured by Dalton). The polyester grains were further pulverized with a jet mill (PJM-80SP manufactured by Nippon Pneumatic Mfg.) to yield particles with a maximum particle size of 40 µm or less. The particles were classified with an airflow classifier MDS-3 (manufactured by Nippon Pneumatic Mfg.) to an average particle size of 8 µm. (3) Coating Polyester Particles with Aggregation Inhibitor

A blender, Waring Blender 7012 manufactured by Waring, was charged with 100 parts by weight of the polyester particles and 1 part by weight of aggregation inhibitor, fumed silica (AEROSIL R972, produced by Nippon Aerosil), and the materials were mixed at a rotational speed of 15600 rpm for 60 s. The particles subjected to the mixing were removed into a glass container and allowed to stand at room temperature for 24 hours, followed by ensuring that the polyester was kept in a flowable powder (particles) form without aggregating into blocks. This suggests that the aggregation inhibitor coats the polyester particles to keep the particles unaggregated. The glass transition temperature Tg of the finally obtained binder was 65°C.

### (4) Formation of Sheet (Fiber-Based Item) of Example 1

A cellulose powder, KC FLOCK W50-S produced by Nippon Paper Industries, was used as the raw material fibers for the sheet. Into a Waring Blender model 7012 were added 20 parts by weight of the fibers and 5 parts by weight of the binder (aggregation inhibitor-coated polyester) produced in the above-described process. The materials were mixed at a rotational speed of 3100 rpm for 7 s to yield a mixture.

The mixture (40 parts by weight) was passed through a sieve with a mesh size of 0.6 mm and a diameter of 200 mm and accumulated onto a fluororesin-coated aluminum disk with a diameter of 250 mm and a thickness of 1 mm (SUMIFLON Coated Aluminum manufactured by Sumitomo Electric Fine Polymer), using an electric sieve shaker AS-200 manufactured by Retsch. The accumulated mixture was covered with another fluororesin-coated aluminum disk with the same diameter and pressed into a sheet with a press machine. At this time, the pressure applied to the sheet was 1 MPa.

The pressed mixture was heated between aluminum plates at 150°C for 15 s with a heat press machine. After the pressure was removed, the mixture was cooled to room temperature. The mixture was peeled from the aluminum plates to yield a sheet. Such heat press enables the binder to penetrate among the cellulose fibers. Thus, the resulting sheet can exhibit the tensile strength and rigidity that the sheet should intrinsically have. The resulting sheet had a thickness of about 130 µm.

### 4. 1. 2. EXAMPLE 2

The binder and the sheet were produced in the same manner as in Example 1. The volume average particle size of the binder was adjusted to 12 µm.

### 4. 1. 3. EXAMPLE 3

The binder and the sheet were produced in the same manner as in Example 1. The volume average particle size of the binder was adjusted to 20 µm.

### 4. 1. 4. COMPARATIVE EXAMPLE 1

As an alternative to the polyester used in Examples 1 to 3, a commercially available polyester VYLON 220 (Tg = 54°C) was used.

The polyester particles were sized and coated with the aggregation inhibitor in the same manner as in Example 1 to yield the binder of Comparative Example 1 with a volume average particle size of 12 µm. The sheet was formed in the same manner as in Example 1.

### 4. 1. 5. COMPARATIVE EXAMPLE 2

A polyester was synthesized as described below. Into a 5 L four-neck stainless flask having a nitrogen gas inlet and equipped with a stirrer and a thermometer were added 25.5 mol of ethylene glycol, 25.5 mol of 1,2-propylene glycol, 47.2 mol of terephthalic acid, and 1.8 mol of trimellitic anhydride. The materials were heated to 120°C to melt, followed by adding titanium tetraisopropoxide. The materials were further heated to 240°C under nitrogen to conduct a reaction for 3 hours and a further reaction at 220°C and 5 kPa for 3 hours. The resulting polyester was solidified by cooling to room temperature and then roughly crushed with a Rotoplex.

The polyester particles were sized and coated with the aggregation inhibitor in the same manner as in Example 1 to yield the binder of Comparative Example 2 with a volume average particle size of 12 µm. The sheet was formed in the same manner as in Example 1. The glass transition temperature Tg of the finally obtained binder was 65°C.

### 4. 2. Evaluation

### 4. 2. 1. Glass Transition Temperature

The glass transition temperatures of the binders were measured with a differential scanning calorimeter (DSC) Thermo Plus EVO2 DSC8231 manufactured by Rigaku. In an aluminum pan were placed 10 mg of binder sample and 10 mg of Al₂O₃ powder as a reference sample. A DSC curve was formed by heating the sample to 150°C, then cooling the sample to 0°C, and again heating to 150°C at a rate of 20°C/min. The glass transition temperature (Tg) was defined as the temperature at the intersection of the baseline of the measurement curve at low temperatures and the tangent at the largest gradient point of a stepped curve. The measurement results of the binders in each Example are presented in Table 1.

### 4. 2. 2. Softening Point

The softening point of the binders was measured with a flow tester (CFT-500D manufactured by Shimadzu). While being heated at a rate of 5°C/min, 1.0 g of sample was extracted through a nozzle with a diameter of 1 mm and a length of 1 mm by applying a load of 20 kgf to the sample. The stroke was plotted against temperature. The temperature at which half of the sample flowed out was defined as the softening point. The measurement results of the binders in each Example are presented in Table 1.

### 4. 2. 3. Dynamic Viscoelasticity Measurement of Binder

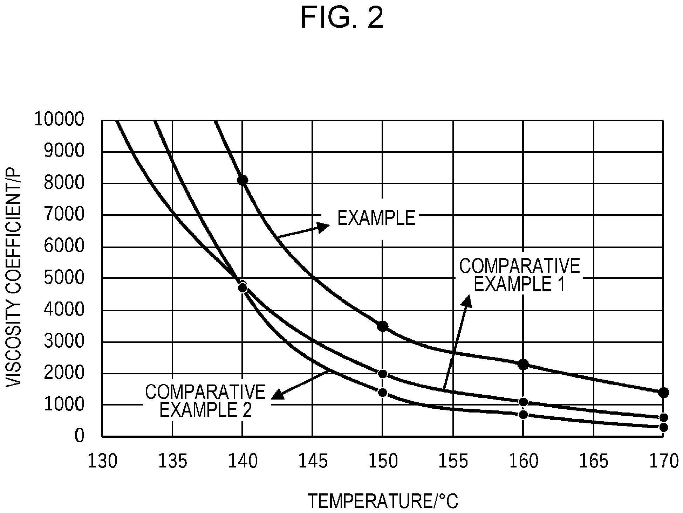

Rheosol G3000 manufactured by UBM was used for dynamic viscoelasticity measurement of the binder samples. The binder (0.7 g) was placed into a cylinder with an inner diameter of 20 mm and pressed at 1.5 ton/cm² to form a pellet. The viscosity coefficient was measured at a frequency of 1 Hz in a temperature range of 100°C to 180°C varied at a heating rate of 5°C/min, using parallel plates as a chuck. Table 1 presents the viscosity coefficients at 150°C of the binders in each Example. Also, Table 2 presents the viscosity coefficients at varying temperatures. FIG. 2 shows the temperature dependences of the viscosity coefficients of samples. For the Examples, only the results of Example 1 are plotted because the binders of Examples 1 to 3 are made of the same materials.

### 4. 2. 4. Amount of Paper Dust from Sheet (Fiber-Based Item)

A cut piece measuring 20 mm by 20 mm of a masking film tape 605 #50 (manufactured by Teraoka Seisakusho), which is a low tack tape, was pasted to the sheet formed in each Example. After being removed from the sheet, the tape was observed under a microscope VHX-5000 (manufactured by Keyence) for counting the number of pieces of paper dust. When the number of pieces of paper dust transferred to the 20 mm × 20 mm cut tape was 10 or less, the sheet was rated as "A"; when the number of pieces of paper dust was 11 to 50, the sheet was rated as "B"; and when the number of pieces of paper dust was 51 or more, the sheet was rated as "C". The results are presented in Table 1.

### 4. 2. 5. Tensile Strength

The tensile strength of each sheet of the Examples and Comparative Examples was measured in accordance with JIS P8113 at room temperature (23°C) and a humidity of 50%. The sheet was formed by heat press. The sheet was cut into a test piece of 180 mm in full length. The test piece was drawn at a speed of 20 mm/min with a tensile tester AGS-X (manufactured by Shimadzu). The breaking stress (MPa) of the test piece was calculated from the maximum load at which the test piece was broken and defined as the tensile strength. The tensile test was performed, in accordance with JIS P8111, in an environment in which the room temperature is 23°C and the humidity is 50%. The measurement results were evaluated with reference to 15 MPa, which is practical stress. When the breaking stress was 15 MPa or more, the sample was rated as "A"; and when it was less than 15 MPa, the sample was rated as "B". The evaluation results are presented in Table 1.

### 4. 2. 6. Storage Stability of Binder in Container

For evaluating the stability of the binder in storage, the binder was stored in a container at 50°C. The binder powder whose flowability did not vary was rated as "A", and the binder sample whose flowability changed in visual observation was rated as "B". The results were presented in Table 1.

**Table 1**

| | Glass transition temperature (°C) | Softening point (°C) | Viscosity coefficient (P) at 150°C | Volume average particle size (µm) of binder | Number of paper dust particles | Storage stability of binder in a container | Tensile strength of sheet |
|---|---|---|---|---|---|---|---|
| Example 1 | 65 | 125 | 3500 | 8 | A | A | A |
| Example 2 | | | | 12 | A | A | A |
| Example 3 | | | | 20 | B | A | B |
| Comparative Example 1 | 54 | 96 | 2000 | 12 | C | B | A |
| Comparative Example 2 | 65 | 110 | 1400 | 12 | C | A | A |

**Table 2**

| Temperature (°C) | Viscosity coefficient (P) | | |
|---|---|---|---|
| | Example | Comparative Example 1 | Comparative Example 2 |
| 100 | 238000 | 69600 | 269000 |
| 110 | 104000 | 67800 | 110000 |
| 120 | 53300 | 31000 | 55500 |
| 130 | 22200 | 11200 | 15900 |
| 140 | 8100 | 4800 | 4700 |
| 150 | 3500 | 2000 | 1400 |
| 160 | 2300 | 1100 | 700 |
| 170 | 1400 | 600 | 300 |
| 180 | 600 | 300 | 150 |

### 4. 3. Evaluation Results

In comparison between Example 2 and Comparative Example 1 using binders having the same volume average particle size of 12 µm, the amount of paper dust from the sheet of Example 2 was smaller than that of Comparative Example 1. In comparison between the Examples and Comparative Example 2 having the same Tg, the amount of paper dust from any sheet of the Examples was smaller than that of Comparative Example 2. These results can depend on the viscosity coefficient of melted binders.

The viscosities at 150°C of the Examples were higher than those of the Comparative Examples. This is probably because when being heated at 150°C in the sheet forming process, the binders of the Examples are spread wider by pressing, without penetrating the sheet in the thickness direction. Such a binder can spread near the surface of the sheet to reduce the falling of fiber fragments. However, a binder having an excessively high viscosity coefficient is less likely to spread favorably even by pressing. A viscosity coefficient higher than 3500 P and lower than 50000 P may be practical.

In comparison among Examples 1 to 3, the smaller the volume average particle size was, the smaller the amount of paper dust was. The tensile strength of the sheet of Example 3 using a binder having a volume average particle size of 20 µm did not reach the practical level. This is probably because the weight-based content of a binder with large particle sizes is lower than that of a binder with smaller particle sizes and accordingly decreases in the number of contact points with fibers.

In addition, the binders of Examples 1 to 3 and Comparative Example 1 having Tg of 65°C or more did not change in flowability in the storage test in a container at 50°C. In contrast, the binder of Comparative Example 1 having a Tg of 54°C aggregated to form blocks.

The subject matter disclosed herein may be implemented in substantially the same manner as in any of the disclosed embodiments (for example, in terms of function, method, and results, or in terms of purpose and effect). Some elements used in the disclosed embodiments but not essential may be replaced. Implementations capable of producing the same effect as produced in the disclosed embodiments or achieving the same object as in the disclosed embodiments are also within the scope of the subject matter of the present disclosure. A combination of any of the disclosed embodiments with a known art is also within the scope of the subject matter of the present disclosure.

The above-described embodiments and modifications derive the following.

The binder that is used for forming fiber-based items and that binds fibers according to an aspect contains a polyester and an aggregation inhibitor. The polyester contains a structural unit derived from polyethylene terephthalate, a structural unit derived from one or more polyvalent carboxylic acids, and a structural unit derived from one or more polyhydric alcohols including trimethylolpropane. The binder exhibits a viscosity coefficient higher than 3500 P at 150°C in dynamic viscoelasticity measurement.

The binder has a sufficiently high viscosity coefficient at 150°C. Accordingly, in the process of forming a fiber-based item, the binder at the surface of the material mixture of the fiber-based item is unlikely to penetrate the material mixture. Thus, the polyester in the binder at the surface of the material mixture, or the final fiber-based item, is likely to bind to fiber fragments or the like, reducing dust falling.

The binder may have a glass transition temperature of 65°C or more.

The powder of such a binder tends to be consistent in flowability during storage at temperature higher than room temperature and is unlikely to aggregate and forming blocks, thus being stable in storage.

The binder may have a softening point of 150°C or less.

Such a binder increases the mechanical strength of the final fiber-based item.

The binder may have a volume average particle size of 12 µm or less.

Such a binder reduces dust falling in the process of forming the binder-based item. Also, such a binder increases the mechanical strength of the final fiber-based item.

The fiber-based item forming apparatus according to an aspect includes the above-described binder.

The fiber-based item forming apparatus reduces the occurrence of minute particles, such as fiber dust. Thus, the apparatus can reduce the accumulation of dust or minute particles therein.

The method for forming a fiber-based item includes mixing fibers and a binder to prepare a mixture, and heating the mixture. The binder contains a polyester and an aggregation inhibitor. The polyester contains a structural unit derived from polyethylene terephthalate, a structural unit derived from one or more polyvalent carboxylic acids, and a structural unit derived from one or more polyhydric alcohols including trimethylolpropane. The binder exhibits a viscosity coefficient higher than 3500 P at 150°C in dynamic viscoelasticity measurement.

The binder used in this method has a sufficiently high viscosity coefficient at 150°C. Accordingly, in the step of heating the mixture, the binder at the surface of the mixture is unlikely to penetrate the mixture. Thus, the polyester in the binder at the surface of the material mixture, or the final fiber-based item, is likely to bind to fiber fragments or the like, consequently providing a fiber-based item from which dust is unlikely to fall.

## Claims

1. A binder that is used for forming fiber-based items and that binds fibers, the binder comprising:
a polyester containing a structural unit derived from polyethylene terephthalate, a structural unit derived from at least one polyvalent carboxylic acid, and a structural unit derived from at least one polyhydric alcohol including trimethylolpropane; and
an aggregation inhibitor being inorganic fine particles,
wherein
the binder exhibits a viscosity coefficient higher than 3500 poises at 150°C in dynamic viscoelasticity measurement;
wherein the polyethylene terephthalate content in the polyester is 30% to 55%;
wherein the polyvalent carboxylic acid content in the polyester is 15% to 30%; and
wherein the trimethylolpropane content in the polyester is 0.1% to 5%.

2. The binder according to claim 1, wherein
the binder has a glass transition temperature of 65°C or more.

3. The binder according to claim 1, wherein
the binder has a softening point of 150°C or less.

4. The binder according to claim 1, wherein
the binder has a volume average particle size of 12 µm or less.

5. A method for forming a fiber-based item, comprising:
mixing fibers and a binder containing a polyester and an aggregation inhibitor to prepare a mixture, the polyester containing a structural unit derived from polyethylene terephthalates, a structural unit derived from at least one polyvalent carboxylic acid, and a structural unit derived from at least one polyhydric alcohol including trimethylolpropane; and
heating the mixture,
wherein
the binder exhibits a viscosity coefficient higher than 3500 poises at 150°C in dynamic viscoelasticity measurement;
wherein the polyethylene terephthalate content in the polyester is 30% to 55%;
wherein the polyvalent carboxylic acid content in the polyester is 15% to 30%;
wherein the trimethylolpropane content in the polyester is 0.1% to 5%; and
wherein the mass ratio of the binder to the fibers is from 5% to 70%.

## Patentansprüche

1. Bindemittel, das zum Bilden von Gegenständen auf Faserbasis verwendet wird und das Fasern bindet, wobei das Bindemittel umfasst:
einen Polyester, der eine Struktureinheit, die von Polyethylenterephthalat abgeleitet ist, eine Struktureinheit, die von mindestens einer mehrwertigen Carbonsäure abgeleitet ist, und eine Struktureinheit, die von mindestens einem mehrwertigen Alkohol, enthaltend Trimethylolpropan, abgeleitet ist, beinhaltet; und
einen Aggregationsinhibitor, der anorganische Feinpartikel ist,
wobei
das Bindemittel einen Viskositätskoeffizienten höher als 3500 Poise bei 150°C in dynamischer Viskoelastizitätsmessung aufweist;
wobei der Polyethylenterephthalatgehalt in dem Polyester 30% bis 55% ist;
wobei der mehrwertige Carbonsäuregehalt in dem Polyester 15% bis 30% ist; und
wobei der Trimethylolpropangehalt in dem Polyester 0,1% bis 5% ist.

2. Bindemittel nach Anspruch 1, wobei das Bindemittel eine Glasübergangstemperatur von 65°C oder mehr aufweist.

3. Bindemittel nach Anspruch 1, wobei das Bindemittel einen Erweichungspunkt von 150°C oder weniger aufweist.

4. Bindemittel nach Anspruch 1, wobei das Bindemittel eine volumengemittelte Partikelgröße von 12 µm oder weniger aufweist.

5. Verfahren zum Bilden von Gegenständen auf Faserbasis, umfassend:
Mischen von Fasern und einem Bindemittel, das einen Polyester und einen Aggregationsinhibitor beinhaltet, um ein Gemisch zuzubereiten, wobei der Polyester eine Struktureinheit, die von Polyethylenterephthalaten abgeleitet ist, eine Struktureinheit, die von mindestens einer mehrwertigen Carbonsäure abgeleitet ist, und eine Struktureinheit, die von mindestens einem mehrwertigen Alkohol, enthaltend Trimethylolpropan, abgeleitet ist, beinhaltet; und
Erhitzen des Gemisches,
wobei
das Bindemittel einen Viskositätskoeffizienten höher als 3500 Poise bei 150°C in dynamischer Viskoelastizitätsmessung aufweist;
wobei der Polyethylenterephthalatgehalt in dem Polyester 30% bis 55% ist;
wobei der mehrwertige Carbonsäuregehalt in dem Polyester 15% bis 30% ist;
wobei der Trimethylolpropangehalt in dem Polyester 0,1% bis 5% ist; und
wobei das Masseverhältnis des Bindemittels zu den Fasern 5% bis 70% ist.

## Revendications

1. Liant utilisé pour former des éléments à base de fibres et lequel lie des fibres, le liant comprenant :
un polyester contenant une unité structurelle dérivée du polyéthylène téréphtalate, une unité structurelle dérivée d'au moins un acide carboxylique polyvalent, et une unité structurelle dérivée d'au moins un alcool polyhydrique incluant du triméthylolpropane ; et
un inhibiteur d'agrégation étant des particules fines inorganiques,
dans lequel
le liant présente un coefficient de viscosité supérieur à 3500 poises à 150°C en mesure de viscoélasticité dynamique ;
dans lequel la teneur en polyéthylène téréphtalate dans le polyester est comprise entre 30% et 55% ;
dans lequel la teneur en acide carboxylique polyvalent dans le polyester est comprise entre 15% et 30% ; et
dans lequel la teneur en triméthylolpropane dans le polyester est comprise entre 0,1% et 5%.

2. Liant selon la revendication 1, dans lequel
le liant présente une température de transition du verre de 65°C ou plus.

3. Liant selon la revendication 1, dans lequel
le liant présente un point d'assouplissement de 150°C ou moins.

4. Liant selon la revendication 1, dans lequel
le liant présente une taille de particules moyenne en volume de 12 µm ou moins.

5. Procédé de formation d'un élément à base de fibres, comprenant :
le mélange de fibres et d'un liant contenant un polyester et un inhibiteur d'agrégation pour la préparation d'un mélange, le polyester contenant une unité structurelle dérivée du polyéthylène téréphtalate, une unité structurelle dérivée d'au moins un acide carboxylique polyvalent, et une unité structurelle dérivée d'au moins un alcool polyhydrique incluant du triméthylolpropane ; et
le chauffage du mélange,
dans lequel
le liant présente un coefficient de viscosité supérieur à 3500 poises à 150°C en mesure de viscoélasticité dynamique ;
dans lequel la teneur en polyéthylène téréphtalate dans le polyester est comprise entre 30% et 55% ;
dans lequel la teneur en acide carboxylique polyvalent dans le polyester est comprise entre 15% et 30% ; et
dans lequel la teneur en triméthylolpropane dans le polyester est comprise entre 0,1% et 5% ; et
dans lequel le rapport en masse du liant aux fibres est compris entre 5% et 70%.
